Europäisches Patentamt

European Patent Office

Office européen des brevets

(19)

(11) Veröffentlichungsnummer: **0 433 807 A2**

# (12) EUROPÄISCHE PATENTANMELDUNG

(21) Anmeldenummer: 90123608.3

(22) Anmeldetag: 08.12.90

(51) Int. Cl.⁵: **B32B 27/00**, C08G 18/66, C08K 3/40

(30) Priorität: 22.12.89 DE 3942468

(43) Veröffentlichungstag der Anmeldung:
26.06.91 Patentblatt 91/26

(84) Benannte Vertragsstaaten:
DE ES FR GB IT SE

(71) Anmelder: **BAYER AG**

**W-5090 Leverkusen 1 Bayerwerk(DE)**

(72) Erfinder: **Wagner, Joachim, Dr.**
**Semmelweisstrasse 135**
**W-5000 Koeln 80(DE)**
Erfinder: **Rasshofer, Werner, Dr.**
**Leopold-Gmelin-Strasse 31**
**W-5000 Koeln 80(DE)**
Erfinder: **Elsner, Thomas, Dr.**
**Suedallee 70**
**W-4000 Düsseldorf 13(DE)**
Erfinder: **Freitag, Hans-Albrecht, Dr.**
**Eulenweg 34**
**W-5653 Leichlingen(DE)**

(54) **Verfahren zur Herstellung von Formkörpern oder Folien aus vernetzten Polyisocyanat-Polyadditionsprodukten und die so erhaltenen Formkörper.**

(57) Ein Verfahren zur Herstellung von Formkörpern oder Folien auf Basis von geschäumten Polyisocyanat-Polyadditionsprodukten durch thermoplastische Formgebung, wobei man gegebenenfalls Füll- und/oder Verstärkungsstoffe in einer Menge von bis zu 80 Gew.-% enthaltende Polyisocyanat-Polyadditionsprodukte aus ausgewählten Ausgangsmaterialien unter solchen Temperatur- und Druckbedingungen einer thermoplastischen Formgebung unterzieht, daß die resultierenden Formkörper eine Dichte aufweisen, die mindestens 10 % über der Dichte der eingesetzten Polyisocyanat-Polyadditionsprodukte liegt, und die nach diesem Verfahren erhaltenen Formkörper.

EP 0 433 807 A2

# VERFAHREN ZUR HERSTELLUNG VON FORMKÖRPERN ODER FOLIEN AUS VERNETZTEN POLYISOCYANAT-POLYADDITIONSPRODUKTEN UND DIE SO ERHALTENEN FORMKÖRPER

Die vorliegende Erfindung betrifft ein Verfahren zur Herstellung von Formkörpern oder von Flächengebilden auf Basis von Urethangruppen und gegebenenfalls Harnstoffgruppen aufweisenden, geschäumten Polyisocyanat-Polyadditionsprodukten durch thermoplastische Formgebung, wobei als Polyisocyanat-Polyadditionsprodukte geschäumte Materialien zum Einsatz gelangen, deren Dichte während der thermoplastischen Formgebung erhöht wird und die so erhaltenen Formkörper.

Bei den als Ausgangsmaterial eingesetzten Polyisocyanat-Polyadditionsprodukten handelt es sich um thermoplastisch verformbare Kunststoffe, d.h. um solche, die unter den Temperatur- und Druckbedingungen das erfindungsgemäßen Verfahrens soweit erweichen, daß sie verformt werden können, ohne hierbei jedoch zu schmelzen. Es handelt sich somit nicht um echte "Thermoplaste", d.h. Kunststoffe, die bei erhöhter Temperatur schmelzen und daher beispielsweise in Extrudern verarbeitet werden könnten.

Es ist bereits bekannt, Formkörper oder Flächengebilde durch thermoplastische Verformung von Polyurethanen herzustellen (vgl. z.B. Becker/Braun, Kunststoffhandbuch, Band 7, "Polyurethane", Carl Hanser Verlag, München/Wien (1983), Seiten 428 ff.). Bei den ersten bekannt gewordenen, thermoplastisch verarbeitbaren Polyurethanelastomeren handelt es sich um solche auf Basis von Diisocyanaten, höhermolekularen Dihydroxyverbindungen, insbesondere höhermolekularen Polyesterdiolen und niedermolekularen Diolen als Kettenverlängerungsmittel, wobei die Polyurethane möglichst linear aufgebaut, d.h. keine Vernetzungs- bzw. Verzweigungsstellen im Molekül aufweisen sollten. Auch die thermoplastische Verformung von Polyurethanen mit verzweigter Molekülstruktur ist bereits bekannt. So wird beispielsweise in DE-OS 2 461 399, DE-OS 2 164 381, DE-OS 2 032 174 und DE-OS 2 607 380 die Herstellung und thermoplastische Verformung von Polyurethanschaumstoffen beschrieben. Die DE-OS 3 733 756 befaßt sich ihrerseits mit der Herstellung von Formkörpern oder Folien auf Basis von Polyisocyanat-Polyadditionsprodukten einer Dichte von mindestens 0,8 g/cm$^3$, wobei als Polyisocyanat-Polyadditionsprodukte Elastomere verwendet werden, bei deren Herstellung Verbindungen des Molekulargewichtsbereichs 1800 bis 12 000 mit gegenüber Isocyanatgruppen reaktionsfähigen Gruppen und einer Funktionalität im Sinne der Isocyanat-Additionsreaktion von mindestens 2,5 zusammen mit niedermolekularen, vorzugsweise difunktionellen Verbindungen mit gegenüber Isocyanatgruppen reaktionsfähigen Gruppen als Reaktionspartner für die Polyisocyanate zur Anwendung gelangen. Gemäß der Lehre der DE-OS 3 733 756 können die thermoplastisch zu verarbeitenden Polyisocyanat-Polyadditionsprodukte auch Füll-und Verstärkungsstoffe enthalten.

Jetzt wurde überraschend gefunden, daß besonders hochwertige Formkörper und Folien auf Basis von Polyisocyanat-Polyadditionsprodukten nach einer Verfahrensvariante zugänglich sind, bei welcher zunächst ein geschäumtes, vorzugsweise Füll- und/oder Verstärkungsstoffe enthaltendes Polyisocyanat-Polyadditionsprodukt einer Rohdichte von 0,3-1,2 g/cm$^3$ unter Mitverwendung von niedermolekularen, mindestens trifunktionellen Verbindungen mit gegenüber Isocyanatguppen reaktionsfähigen Gruppen hergestellt und anschließend der thermoplastischen Formgebung unter gleichzeitiger irreversibler Kompression unter Dichteerhöhung unterzogen wird.

Gegenstand der Erfindung ist ein Verfahren zur Herstellung von Formkörpern oder Folien auf Basis von geschäumten Polyisocyanat-Polyadditionsprodukten durch thermoplastische Formgebung bei mindestens 50°C liegenden Temperaturen und mindestens 5 bar liegenden Drücken, dadurch gekennzeichnet, daß man als geschäumte Polyisocyanat-Polyadditionsprodukte solche verwendet, die gegebenenfalls Füll- und/oder Verstärkungsstoffe in einer Menge von bis zu 80 Gew.-%, bezogen auf das Gesamtgewicht, enthalten, eine Dichte von 0,3-1,2 g/cm$^3$ aufweisen und durch Umsetzung von

a) organischen Polyisocyanaten
mit

b) gegebenenfalls Ether- und/oder Estergruppen aufweisenden (Cyclo)Alkanpolyolen des Molekulargewichtsbereichs 92 bis 1.799 und einer Hydroxylfunktionalität von mindestens 3
gegebenenfalls unter Mitverwendung von

c) Verbindungen mit einem Molekulargewicht von 1.800 bis 12.000, welche im statistischen Mittel mindestens 2,5, gegenüber Isocyanatgruppen reaktionsfähige Gruppen aufweisen und/oder

d) Diaminen mit zwei primären und/oder sekundären aromatisch gebundenen Aminogruppen des Molekulargewichtsbereichs 108 bis 400 und/oder

e) gegebenenfalls Ethergruppen aufweisenden (Cyclo) Alkandiolen und/oder (Cyclo)Alkanpolyaminen des Molekulargewichtsbereichs 60 bis 1.799
unter Mitverwendung von

f) Treibmitteln, sowie gegebenenfalls weiteren aus der Polyurethanchemie an sich bekannten Hilfs- und Zusatzmitteln

unter Einhaltung einer Isocyanatkennzahl von 62 bis 200 im Ein- oder Mehrstufenverfahren hergestellt worden sind, mit der Maßgabe, daß die Komponente b) in einer solchen Menge mitverwendet wird, daß die Gesamtmenge der Komponente b) mindestens 5 Gew.-%, bezogen auf das Gewicht der Komponenten a)-e) beträgt und

die Temperatur- und Druckbedingungen während der thermoplastischen Formgebung im übrigen so gewählt werden, daß die resultierenden Formkörper eine Dichte aufweisen, die mindestens 10 % über der Dichte der eingesetzen Polyisocyanat-Polyadditonsprodukte liegt.

Gegenstand der Erfindungsind auch die nach diesem Verfahren erhaltenen Formkörper.

Bei den beim erfindungsgemäßen Verfahren einzusetzenden Polyisocyanat-Polyadditonsprodukten handelt es sich um geschäumte Kunststoffe des Dichtebereichs 0,3-1,2, vorzugsweise 0,5 bis 1,0 g/cm$^3$, die vorzugsweise Füll- und/ oder Verstärkungsstoffe in einer Menge von bis zu 80 Gew.-%, bezogen auf das Gesamtgewicht, enthalten. Besonders bevorzugt handelt es sich bei diesen Materialien um halbharte bis harte Schaumstoffe einer Härte von Shore D von mindestens 40, vorzugsweise mindestens 45. Die Schaumstoffe enthalten vorzugsweise bis zu 80 Gew.-%, besonders bevorzugt 20-60 Gew.-% an Füll- und/oder Verstärkungssstoffen. Bei den Polyisocyanat-Polyadditionsprodukten handelt es sich, wie bereits ausgeführt, um Schaumstoffe, d.h. um Kunststoffe, deren Rohdichte maximal 90 %, vorzugsweise maximal 70 % der Dichte des entsprechenden porenfreien Materials entspricht.

Die Herstellung der Polyisocyanat-Polyadditonsprodukte erfolgt durch an sich bekannte Umsetzung der bereits obengenannten Ausgangsmaterialien, wobei diese sowohl ein- als auch mehrstufig miteinander zur Reaktion gebracht werden könnnen, und wobei die Umseztung sowohl in geschlossenen Formen, als auch durch freie Verschäumung der Ausgangsmaterialien erfolgen kann.

Geeignete Ausgangsmaterialien a) sind beliebige organische Polyisocyanate, vorzugsweise jedoch aromatische Polyisocyanate. In Betracht kommen beispielsweise die in EP-B-00 81 701, Kolonne 3, Zeile 30 bis Kolonne 4, Zeile 25 genannten Verbindungen. Besonders bevorzugt werden als Komponente a) Polyisocyanatgemische der Diphenylmethan-Reihe eingesetzt, wie sie in an sich bekannter Weise durch Phosgenierung von Anilin/Formaldehyd-Kondensaten zugänglich sind und die bei 23°C eine Viskosität von 50 bis 500 mPa.s aufweisen.

Bei der Komponente b) handelt es sich um mindestens 3, vorzugsweise 3 oder 4 alkoholische Hydroxylgruppen aufweisende Polyole des Molekulargewichtsbereichs 92-1.799, vorzugsweise 92-399. In Betracht kommen beispielsweise einfache mehrwertige Alkohole wie Glycerin, Trimethylolpropan, Pentaerythrit oder auch Ethergruppen aufweisende, mehrwertige Alkohole wie beispielsweise die Ethoxylierungs- und/oder Propoxylierungsprodukte des genannten Molekulargewichtsbereichs von mehrfunktionellen Startermolekülen wie den genannten mehrwertigen Alkoholen oder anderen höherfunktionellen Startern wie beispielsweise Ethylendiamin. Beliebige Gemische der beispielhaft genannten mehrwertigen Alkoholen können ebenfalls verwendet werden.

Bei der gegebenenfalls mitzuverwendenden Komponente c) handelt es sich um Verbindungen mit gegenüber Isocyanatgruppen reaktionsfähigen Gruppen des Molekulargewichtsbereichs 1.800 bis 12.000, vorzugsweise 3.000 bis 7.000 oder um Gemische derartiger Verbindungen, wobei die Komponente c) im Sinne der Isocyanat-Additionsreaktion eine über 2,5 liegende (mittlere) Funktionalität aufweist. Vorzugsweise liegt die (mittlere) Funktionalität der Komponente c) bei 2,5 bis 3,0, insbesondere bei 2,8 bis 3,0. Besonders gut als Komponente c) geeignete Verbindungen sind, diesen Ausführungen entsprechende, Polyetherpolyole bzw. Gemische von Polyetherpolyolen wie sie in DE-AS 2 622 951, Kolonne 6, Zeile 65 - Kolonne 7, Zeile 47 offenbart sind, wobei auch erfindungsgemäß solche Polyetherpolyole bevorzugt sind, deren Hydroxylgruppen zumindest zu 50 %, vorzugsweise zumindest zu 80 % aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente c) geeignet, sofern sie den obengemachten Ausführungen entsprechen, jedoch gegenüber den Polyetherpolyolen weniger bevorzugt.

Aus Ausgangskomponente c) ebenfalls gut geeignet sind, obigen Ausführungen entsprechende, Aminopolyether oder Gemische von Aminopolyethern, d.h. Polyether mit gegenüber Isocyanatgruppen reaktionsfähigen Gruppen, die zumindest zu 50 Äquivalent-%, vorzugsweise zumindest zu 80 Äquivalent-% aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Kolonne 4, Zeile 26 bis Kolonne 5, Zeile 40 genannten Verbindungen. Die Aminogruppen in diesen Verbindungen können auch in geeigneter Form derivatisiert sein, z.B. als Ketimingruppen.

Als Komponente c) können selbstverständlich auch beliebige Gemische der beispielhaft genannten Polyhydroxylverbindungen mit den beispielhaft genannten Aminopolyethern verwendet werden.

Bei der gegebenenfalls mitzuverwendenden Komponente d) handelt es sich um aromatische Diamine der in EP-B-00 81 701, Kolonne 5, Zeile 58 bis Kolonne 6, Zeile 34 beispielhaft genannten Art, wobei auch erfindungsgemäß die dort als bevorzugt herausgestellten Diamine bevorzugt sind.

Bei den gegebenenfalls als weitere Aufbaukomponente e) mitzuwendenden Polyolen oder Polyaminen handelt es sich um beliebige nicht-aromatische Verbindungen mit zwei gegenüber Isocyanatgruppppen reaktionsfähigen Grupppen des Molekulargewichtsbereichs 60 bis 1.799, vorzugsweise 62 bis 500, insbesondere 62 bis 400. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs. In Betracht kommen auch cycloaliphatische Ringe aufweisende Polyole wie beispielsweise 1,4-Dihydroxy-cyclohexan oder 1,4-Bishydroxymethyl-cyclohexan.

Es ist ein wesentlicher Punkt, daß bei der Herstellung der Schaumstoffe die Komponenten b) in solcher Menge zur Anwendung gelangt, daß der Gewichtsanteil der Komponente b), bezogen auf das Gewicht der Komponente a)-e) mindestens 5 Gew.-%, vorzugsweise mindestens 10 Gew.-% beträgt. Besonders bevorzugt werden die Polyisocyanat-Polyadditionsprodukte unter alleiniger Verwendung von Polyolen b) als Reaktionspartner für die Polyisocyanate hergestellt. In jedem Fall muß gewährleistet sein, daß bei Verwendung von Aufbaukomponenten c), d), und/oder e) die mittlere Funktionalität im Sinne der Isocyanat-Additionsreaktion aller Komponenten b)-e) bei mindestens 2,5 liegt.

Da es sich bei den Polyisocyanat-Polyadditionsprodukten um Schaumstoffe handelt, müssen bei ihrer Herstellung zwingend an sich bekannte Treibmittel f), gegebenenfalls neben weiteren Hilfs- und Zusatzmitteln f) eingesetzt werden. In Betracht kommen sowohl chemische als auch physikalische Treibmittel oder auch in den Ausgangskomponenten gelöste inerte Gase. Geeignete Treibmittel sind beispielsweise in EP-B-00 81 701, Kolonne 8, Zeile 31 bis 51, bzw. in dem dort zitierten "Kunststoffhandbuch" so beschrieben.

Zu den bevorzugt mitzuwendenden Hilfs und Zusatzmitteln f) gehören die bereits mehrfach erwähnten Füll und/oder Verstärkungsstoffe, die vorzugsweise in Mengen von bis zu 80 Gew.-%, insbesondere von 20 bis 60 Gew.-%, bezogen auf das Gesamtgewicht aller Ausgangskomponenten a)-f) mitverwendet werden.

Geeignete Füll- und/oder Verstärkungsstoffe sind beispielsweise Bariumsulfat, Kieselgur, Schlämmkreide, Mica oder insbesondere Glasfasern, LC-Fasern, Glasflakes, Glaskugeln, Metall- oder Kohlefasern. Als Füllstoffe besonders bevorzugt sind jedoch flächige Füllstoffe wie Matten unterschiedlicher Flächengewichte, Gewirke, Gestricke, Gewebe, non wovens, Netze, Siebe, Gitter etc. aus Glas, Carbonfasern, LC-Fasern, Polyamid-, Aramid-, Cellulose-etc-Fasern, ferner aus anorganischen Stoffen wie z,B, Carbiden, Metallen wie Aluminium, Stahl oder Kupfer.

Weitere, gegebenenfalls mitzuwendende Hilfs- und Zusatzmittel f) sind beispielsweise die üblichen Katalysatoren für die Polyisocyanat-Polyadditionsreaktionen, oberflächenaktive Zusatzstoffe, Zellregler, Pigmente, Farbstoffe, Flammschutzmittel, Stabilisatoren, Weichmacher oder fungistatisch bzw. bakteriostatisch wirkende Substanzen, wie sie beispielsweise in EP-B-00 81 701, Kolonne 6, Zeile 40 bis Kolonne 9, Zeile 31 beispielhaft beschrieben sind.

Die Herstellung der Polyisocyanat-Polyadditionsprodukte kann, wie bereits angedeutet, nach mehreren Varianten erfolgen. Vorzugsweise erfolgt sie jedoch nach dem Einstufen-Verfahren dergestalt, daß man die Polyisocyanatkomponente a) mit der Komponente b) bzw. einem Gemisch der Komponente b) mit den Komponenten c)-f) unter Verwendung geeigneter Mischapparaturen vermischt und zur Reaktion bringt. Grundsäztlich ist es auch möglich, die Polyisocyanat-Polyadditionsprodukte nach einem "modifizierten Einstufenverfahren" umzusetzen, gemäß welchem die Polyisocyanat-Komponente a) mit einem Teil der gegenüber Isocyanatgruppen reaktionsfähigen Verbindungen unter Bildung von NCO-Semiprepolymeren umsetzt, welche anschließend einstufig mit dem Gemisch aus den restlichen Komponenten mit gegenüber Isocynatgruppen reaktionsfähigen Gruppen zur Reaktion gebracht werden. Auch die Herstellung der Schaumstoffe nach dem klassischen Prepolymerverfahren ist prinzipiell denkbar. In allen Fällen liegt die NCO-Kennzahl (Anzahl der NCO-Gruppen dividiert durch die Anzahl an NCO-reaktiven Gruppen multipliziert mit 100) bei 60 bis 200, vorzugsweise bei 80 bis 180, insbesondere 95 bis 140. Die Hilfs- und Zusatzmittel f) werden im allgemeinen der Komponente b) bzw. dem Gemisch der Komponenten b)-e) vor der Durchmischung mit der Polyisocyanatkomponente a) einverleibt; es ist jedoch prinzipiell auch möglich, gewisse Hilfs- und Zusatzmittel der Polyisocyanatkomponente zuzusetzen, bevor diese mit den übrigen Ausgangsmaterialien vereinigt wird. Bei der Herstellung der Polyisocyanat-Polyadditionsprodukte nach Prepolymer-Verfahren werden die Hilfs- und Zusatzmittel vorzugsweise den NCO-Prepolymeren zugesetzt.

Die Herstellung der Polyisocyanat-Polyadditionsprodukte kann, wie beispielsweise in DE-AS 2 622 951, US-PS 4 218 543 oder EP-B-00 81 701 beschrieben, nach dem Verfahren der Reaktionsspritzgußtechnik in geschlossenen Formen erfolgen, jedoch ist es auch möglich, die Polyisocyanat-Polyadditionsprodukte in

4

offenen Formen oder offen geschäumt als Blockware bzw. Schaumstoffplatten herzustellen.

Die Durchführung des erfindungsgemäßen Verfahrens, d.h. die thermoplastische Verarbeitung der Polyisocyanat-Polyadditionsprodukte kann unter Verwendung beliebiger, hierfür geeigneter, bekannter Apparaturen wie beispielsweise Tiefzieh-Pressen erfolgen. Bei der Durchführung des erfindungsgemäßen Verfahrens kommt es jedoch nicht zu einem Aufschmelzen des Materials, wie es von im eigentlichen Sinne "thermoplastischen" Kunststoffen bekannt ist; eine flüssige, rel. niederviskose, makroskopische Phase wird zu keinem Zeitpunkt eingenommen. Geeignete Verfahren zur Thermoverformung werden z.B. von H. Käufer in "Maschinenmarkt" 88 (1982), Seiten 1068 bis 1071 beschrieben.

Zur erfindungsgemäßen thermoplastischen Formgebung sind die Polyisocyanat-Polyadditionsprodukte in der unterschiedlichsten Ausgangsform geeignet. So ist es beispielsweise möglich, Platten die nach dem Prinzip der Reaktionsspritzgußtechnik in geschlossenen Plattenformen hergestellt worden sind, in Tiefziehpressen weiter zu verformen oder in zerkleinerter Form (Granulate oder Pulver) thermoplastisch zu neuen Formkörpern zu verarbeiten. Außer Tiefziehpressen kommen auch Walzenanlagen, Kalander, Pressen, modifizierte Extruder und modifizierte Spritzgießmaschinen in Betracht. Die Modifikationen der Werkzeuge müssen hierbei so geartet sein, daß die Granulatkörper im wesentlichen unaufgeschmolzen in eine vorgegebene Form unter dem Fülldruck eingedrückt werden können. Sinnvoll sind solche Modifikationen der Werkzeuge, die bewirken, daß die Granulatkörner gegeneinander starken Scherkräften ausgesetzt sind. Beispiele für derartige Modifikationen der Werkzeuge sind große Austrittsdüsen bzw. große Transportkanäle im Extruder oder in der Spritzgußmaschine und in den Formzuleitungskanälen. Scherkräfte, die kurz vor oder während der Formfüllung auftreten, begünstigen den Zusammenhalt des hergestellten Formkörpers. Dies gilt selbstverständlich auch für die ohne Verwendung von Formen hergestellten Polyisocyanat-Polyadditionsprodukte. Ebenfalls können plattenförmig vorliegende Polyisocyanat-Polyadditionsprodukte zu Folien beliebiger Dicke weiterverarbeitet werden. Insbesondere ist die sog. SMC-Technologie auch zur Verarbeitung der in Rede stehenden Produkte geeignet.

Es ist auch möglich, nach dem erfindungsgemäßen Verfahren Formkörper oder Folien herzustellen, die einen schichtförmigen Aufbau aufweisen. Hierzu bilden die erfindungswesentlichen als Ausgangsmaterialien einzusetzenden schaumförmigen Polyisocyanat-Polyadditionsprodukte lediglich eine oder mehrere Schichten eines schichtförmigen Aufbaus, der neben erfindungsgemäßen Ausgangsmaterialien weitere Schichten aus Verstärkungs stoffen oder weiteren anorganischen oder organische Materialien, z.B. weiteren Kunststoffen aufweist. Solche Aufbauten bestehen aus mindestens 2, vorzugsweise 2-8 und besonders bevorzugt 2-4, schichtweise übereinanderliegenden, thermoplastisch verformbaren Kunststoffschichten, wobei der Aufbau gegebenenfalls noch zusätzlich Unter-, Ober-und/oder Zwischenschichten von Füllstoff-und insbesondere Verstärkungsmaterialien aufweisen kann. Mehrschichtige, im wesentlichen zweischichtige Aufbauten können nach der Doppelschußtechnik hergestellt werden. Als zweites Material eignet sich bevorzugt vergleichbar weiches Polyurethanmaterial. Bevorzugt ist beispielsweise ein Aufbau, der einerseits aus hartem, mit hohen Mengen an Verstärkungsmaterial versehenem Polyurethan-Integralschaumstoff und andererseits aus vergleichsweise weichem Polyurethan-Elastomer des Dichtebereichs 0,8 bis 1,3 g/cm³, welches nach der Reaktionsspritzgußtechnik in geschlossenen Formen hergestellt worden ist, besteht. Die Aufbauten werden einer thermoplastischen Formgebung unter solchen Temperatur- und Druckbedingungen zugeführt, daß gleichzeitig mit der thermoplastischen Verformung eine innige Verbindung der einzelnen Schichten stattfindet, so daß ein stabiles Verbundsystem resultiert. Zur Herstellung solcher Aufbauten geeignete weitere Kunststoffe sind beispielsweise in DE-OS 3 809 524 beschrieben.

Die erfindungsgemäß aufgefundende Möglichkeit, die genannten Polyisocyanat-Polyadditionsprodukte thermoplastisch zu verformen, gestattet insbesondere auch die Herstellung von Formkörpern aus Granulaten, Schnipseln und/oder anderen Klein- und Kleinstteilen, wie sie beispielsweise bei der bislang erfolgten Herstellung und Verwendung von Formkörpern auf Basis der Polyisocyanat-Polyadditionsprodukten als Nebenprodukte bzw. Abfall anfielen und bislang verbrannt wurden.

Die thermoplastische Verarbeitung der Polyisocyanat-Polyadditionsprodukte erfolgt im allgemeinen bei einem Druck von mindestens 5 bar, vorzugsweise innerhalb des Druckbereichs von 10 bis 400 bar, insbesondere innerhalb des Druckbereichs von 20 bis 100 bar, bei einer Temperatur von mindestens 50°C, vorzugsweise 100 bis 220°C und insbesondere 150 bis 200°C, wobei die Verformungszeiten bei 1 Sekunde bis 10 Minuten liegen können.

Die Druck- und Temperaturbedingungen müssen ebenso wie die Dauer der thermoplastischen Behandlung so gewählt werden, daß die schaumförmigen Polyisocyanat-Polyadditionsprodukte während der thermoplastischen Formgebung komprimiert werden, so daß die Dichte der resultierenden Verfahrensprodukte mindestens 10 %, vorzugsweise mindestens 40 % über der Dichte der als Ausgangsmaterialien eingesetzten Polyisocyanat-Polyadditionsprodukte liegt. Im Falle der Herstellung von Verbundsystemen, bei denen auch Aufbauten eingesetzt werden können, die neben den erfindungswesentlichem geschäumten

5

Polyisocyanat-Polyadditionsprodukten andere Materialien enthalten, bezieht sich diese Angabe bezüglich der Erhöhung der Dichte selbstverständlich nur auf die in den Verbunden vorliegenden erfindungswesentlichen Polyisocyanat-Polyadditionsprodukte.

Insbesondere bei Verwendung von geschäumten Polyisocyanat-Polyadditionsprodukten, die Verstärkungsstoffe f), insbesondere flächige Verstärkungsstoffe wie beispielsweise Glasfasermatten enthalten, bewirkt diese Kompression der als Schaumstoff eingesetzten Ausgangsmaterialien ein besonders innigen Verbund zwischen Kunstoffmatrix und Verstärkungsmaterial.

Bei der Durchführung des erfindungsgemäßen Verfahren zur Herstellung von Verbundmaterialien ist es auch möglich, jedoch nicht bevorzugt, als Hilfs- und Zusatzmittel Verarbeitungshilfsmittel f) mitzuverwenden, die eine Verbesserung der Haftung zwischen den einzelnen Schichten des Aufbaus bewirken. Derartige Verarbeitungshilfsmittel sind beispielsweise in der deutschen Patentanmeldung P 3 840 167.3 beschrieben.

Der Umstand, daß bei der thermoplastischen Formgebung schaumförmige Ausgangsmaterialien eingesetzt werden, die während der thermoplastischen Behandlung verdichtet werden, erleichtert im übrigen die Durchführung der thermoplastischen Formgebung.

Das erfindungsgemäße Verfahren gestattet die Herstellung von besonders hochwertigen Endprodukten, insbesondere Folienverbunden, die den unterschiedlichsten Verwendungszwecken zugeführt werden können. So eignen sich die erfindungsgemäßen verbundkörper beispielsweise in Form von Hohlkörpern für Einsätze, Becher, Behälter verschiedener Abmessungen und Inhalte, als Abdeckungen für Armaturentafeln, Schaltkonsolen, für flächenförmige Fahrzeugkarosserieelemente wie Türblätter, Seitenteile, Kotflügel oder Motorraum- oder Kofferraumhauben, sowie zur Herstellung von Radkappen, Sitzschalen oder Rückenlehnen. In flächiger Form eignen sich die erfindungsgemäßen Verfahrensprodukte auch als Schreibunterlagen, Anzeigetafeln mit Magnethalterungen, Klebeschildern, Schutzfolien und Beschichtungen für die verschiedensten Zwecke. Die erfindungsgemäßen Verfahrensprodukte können auch in Form von Sitzschalen, Rückenlehnen, Kisten, Bechern, Schalenkoffern und ähnlichen Behältern, Konstruktionsteilen für Karosserieen, Fahrgestelle, Versteifungselementen, Profilen wie z.B. Rahmen, Träger, steifen Karosserieaußenteilen wie Kotflügeln oder Motorraum-bzw. Kofferraumhauben, Radkappen, Radkastenauskleidungen, Versteifungselementen für Blenden, Kraftfahrzeug-Türinnenverkleidungen, Türen, Klappen, Decken und ähnlichen Artikeln Verwendung finden.

Erfindungsgemäße Verfahrensprodukte können außerdem in Form von kleinen Formteilen als Tastaturelementen, hartelastische Dichtungsteile und Manschetten, Griffmulden und Griffkörper, kleinen Dämpfungselementen oder Unterleg-bzw. Distanzscheiben Verwendung finden. Die erfindungsgemäßen Verfahrensprodukte können auch zur Herstellung von versteiften oder unversteiften Profilen für Kabelkanäle und Dichtungslippen oder zur Herstellung von beliebigen anderen, massiven kleinen Körpern verwendet werden.

Beispiele

In den nachfolgenden Beispielen werden folgende Ausgangsmaterialien eingesetzt:

Polyisocyanat-Polyadditionsprodukt I

Es handelt sich um eine Platte der Abmessung 1000 x 6000 x 7 mm der Dichte 0,8 g/cm$^3$ (die Dichte des entsprechenden nicht-geschäumten, füllstofffreien Materials liegt bei 1,18 g/cm$^3$), die durch Umsetzung von 100 Gew.-Teilen einer Polyolkomponente mit 169 Gew.-Teilen einer Polyisocyanatkomponente (Isocyanat-Kennzahl = 110) in einer geschlossenen Plattenform nach der RIM-Technologie hergestellt worden ist. Die Innenwände der Plattenform wurden vorab mit einem handelsüblichen Formtrennmittel (®Fluoricon 35-20 der Fa. Acmos, Bremen) beschichtet. Außerdem wurden zwei Endlosglasmatton des Flächengewichts 450 g/m$^2$ in die Form eingebracht, so daß deren Gewichtsanteil bei 16 Gew.-%, bezogen auf das Gesamtgewicht des Formkörpers, lag. Bei der Glasfasermatte handelte es sich um den Typ U 816 der Fa. Gevetex, Herzogenrath, Bundesrepublik Deutschland.

Die Polyolkomponente bestand aus einem Gemisch aus
20 Gew.-Teilen eines Propoxylierungsprodukts von Trimethylolpropan der OH-Zahl 1000,
30 Gew.-Teilen eines Propoxylierungsprodukts von Trimethylolpropan der OH-Zahl 865,
34 Gew.-Teilen eines Alkoxylierungsprodukts eines Gemischs aus 83,5 Gew.-% Trimethylolpropan und 16,5 Gew.-% Propylenglykol der OH-Zahl 42, bei dessen Herstellung zunächst 7,5 Gew.-% Propylenoxid, dann ein Gemisch aus 30 Gew.-% Ethylenoxid und 40 Gew.-% Propylenoxid und schließlich 22,5 Gew.-% Propylenoxid angelagert worden sind,
2,4 Gew.-Teilen eines handelsüblichen Polysiloxanstabilisators (SR 242 der Fa. BP),
1,15 Gew.-Teilen N,N-Dimethylbenzylamin,

0,30 Gew.-Teilen N,N-Dimethylcyclohexylamin,

0,15 Gew.-Teilen o-Phosphorsäure,

5,0 Gew.-Teilen des Umsetzungsprodukts aus 2 Mol Tallöl und 1 Mol 3-Dimethylamino-propylamin,

2,15 Gew.-Teilen Wasser und

5 Gew.-Teilen einer Schwarzpaste auf Ruß-Basis.

Die Polyolkomponente wurde vor ihrer Verwendung außerdem mit 15 Vol.-% Luft beladen.

Die Polyisocyanatkomponente bestand aus einem Polyisocyanatgemisch der Diphenylmethanreihe der Viskosität 100 mPa.s/23°C mit einem NCO-Gehalt von 31 Gew.-%.

Die Formtemperatur betrug 60°C. Die Temperatur der genannten Ausgangsmaterialien betrug jeweils 25°C. Die Menge des in die Form eingefüllten Reaktionsgemischs wurde so bemessen, daß die obengenannte Dichte resultierte.

Polyisocyanat-Polyadditionsprodukt II

Bezüglich seiner chemischen Zusammensetzung entsprach Polyisocyanat-Polyadditionsprodukt II dem vorgenannten Polyisocyanat-Polyadditionsprodukt I, jedoch wurde die Form vor Befüllen mit dem Reaktionsgemisch mit folgendem dreischichtigen Aufbau versehen:

Eine Schicht Endlosglasmatte U 816, eine Zwischenschicht aus Polyamidgewebe (®Enkamat, Typ 70 10), eine Endlosglasmatte U 816.

Die Gesamtmenge der in die Form eingebrachten Verstärkungsmaterialien entsprach einem Gewichtsteil von 28,5 Gew.-%, bezogen auf das Gesamtgewicht des resultierenden Formkörpers.

Die in die Form eingebrachte Menge an Reaktionsgemisch wurde im übrigen so bemessen, daß der resultierende Formkörper eine Rohdichte von 0,55 g/cm³ aufwies.

Beispiel 1

Das geschäumte, plattenförmige Polyisocyanat-Polyadditionsprodukt I wurde 5 Minuten in einem Heizschrank bei 170°C vorgewärmt und in einer auf 190°C vorgeheizte Preßform (asymetrische Pyramidenform der Höhe 4 cm und einer quadratischen Basis der Basisbreite 9,5 cm, Material Messing) eingelegt. Dann wurde die Presse langsam zugefahren und nach dem Zufahren das Formteil mit einem Druck von 70 bar beaufschlagt.

Nach einer Preßzeit von 2 Minuten wurde das Formteil in der Presse unter Druck bis auf unter 100°C abgekühlt und entformt. Der überstehende Rand wurde abgeschnitten.

Aus dem Formkörper wurden Prüfkörper entnommen und untersucht; die nachfolgende Tabelle zeigt die Meßwerte:

| Prüfwert | | Halbzeug | Formteil |
|---|---|---|---|
| Rohdichte | g/ccm | 0,8 | 1,1 |
| Torsionsmodul | | | |
| RT | MPa | 900 | 1600 |
| 120° C | MPa | 200 | 400 |
| (DIN 53 445) | | | |
| Reißdehnung | % | 7 | 9 |
| Reißfestigkeit | MPa | 15 | 35 |
| (DIN 53 504) | | | |

Das undurchsichtige Halbzeug wird bei dieser Formteilherstellung transparent, so daß man die eingelegten Glasmatten deutlich sehen kann. Der Formkörper zeigt keinerlei Verschiebungen oder Ausdünnungen der Glasmatten in den Kanten und Ecken.

Beispiel 2

Die Platte aus Polyisocyanat-Polyadditionsprodukt II der Dichte 0,55 g/cm³ und der Dicke 7 mm wurde 5 Minuten lang in einem Heizschrank bei 170°C vorgewärmt und in die auf 190°C vorgeheizte Presse zwischen parallele Platten eingelegt. Dann wurde die Presse langsam zugefahren und nach dem Zufahren die Platte mit einem Druck von 70 bar beaufschlagt.

Nach einer Preßzeit von 2 Minuten wurde das Formteil - eine kompakte Platte der Dicke ca. 3 mm - in der Presse unter Druck bis auf unter 100°C abgekühlt und entformt.

Aus dem Formkörper wurden Prüfkörper entnommen und untersucht; die nachfolgende Tabelle zeigt die Meßwerte:

| Prüfwert | | Halbzeug | Formteil |
|---|---|---|---|
| Rohdichte | g/cm³ | 0,549 | 1,317 |
| Torsionsmodul | | | |
| RT | MPa | 280 | 1422 |
| 120° C | MPa | 120 | 422 |
| DIN 53 445) | | | |
| Reißdehnung | % | 2 | 2 |
| Reißfestigkeit | MPa | 23 | 55 |
| (DIN2 53 504) | | | |
| Zug-E-Modul | MPa | 920 | 2890 |

## Ansprüche

1. Verfahren zur Herstellung von Formkörpern oder Folien auf Basis von geschäumten Polyisocyanat-Polyadditionsprodukten durch thermoplastische Formgebung bei mindestens 50°C liegenden Temperaturen und mindestens 5 bar liegenden Drücken, dadurch gekennzeichnet, daß man als geschäumte Polyisocyanat-Polyadditionsprodukte solche verwendet, die gegebenenfalls Füll- und/oder Verstärkungsstoffe in einer Menge von bis zu 80 Gew.-%, bezogen auf das Gesamtgewicht, enthalten, eine Dichte von 0,3-1,2 g/cm³ aufweisen und durch Umsetzung von

a) organischen Polyisocyanaten
mit
b) gegebenenfalls Ether- und/oder Estergruppen aufweisenden (Cyclo)Alkanpolyolen des Molekulargewichtsbereichs 92 bis 1.799 und einer Hydroxylfunktionalität von mindestens 3
gegebenenfalls unter Mitverwendung von
c) Verbindungen mit einem Molekulargewicht von 1.800 bis 12.000, welche im statistischen Mittel mindestens 2,5, gegenüber Isocyanatgruppen reaktionsfähige Gruppen aufweisen und/oder
d) Diaminen mit zwei primären und/oder sekundären aromatisch gebundenen Aminogruppen des Molekulargewichtsbereichs 108 bis 400 und/oder
e) gegebenenfalls Ethergruppen aufweisenden (Cyclo)Alkandiolen und/oder (Cyclo)Alkanpolyaminen des Molekulargewichtsbereichs 60 bis 1.799
unter Mitverwendung von
f) Treibmitteln, sowie gegebenenfalls weiteren aus der Polyurethanchemie an sich bekannten Hilfs- und Zusatzmitteln

unter Einhaltung einer Isocyanatkennzahl von 62 bis 200 im Ein- oder Mehrstufenverfahren hergestellt worden sind, mit der Maßgabe, daß die Komponente b) in einer solchen Menge mitverwendet wird, daß die Gesamtmenge der Komponente b) mindestens 5 Gew.-%, bezogen auf das Gewicht der Komponenten a)-e) beträgt und

die Temperatur- und Druckbedingungen während der thermoplastischen Formgebung im übrigen so wählt, daß die resultierenden Formkörper eine Dichte aufweisen, die mindestens 10 % über der Dichte der eingesetzten Polyisocyanat-Polyadditionsprodukte liegt.

2. Verfahren gemäß Anspruch 1, dadurch gekennzeichnet, daß die der thermoplastischen Formgebung zuzuführenden Polyisocyanat-Polyadditionsprodukte flächige Verstärkungsstoffe in einer Menge von bis zu 80 Gew.-%, bezogen auf das Gesamtgewicht, enthalten.

3. Verfahren gemäß Anspruch 1 und 2, dadurch gekennzeichnet, daß die der thermoplastischen Formgebung zuzuführenden Polyisocyanat-Polyadditionsprodukte Glasfasermatten in einer Menge von bis zu 80 Gew.-%, bezogen auf das Gesamtgewicht, enthalten.

4. Verfahren gemäß Anspruch 1 bis 3, dadurch gekennzeichnet, daß die der thermoplastischen Formgebung zuzuführenden Polyisocyanat-Polyadditionsprodukte in Form von Granulaten, Schnipseln und/oder anderen Klein- und Kleinstteilen vorliegen.

5. Verfahren gemäß Anspruch 1 bis 5, dadurch gekennzeichnet, daß die der thermoplastischen Formgebung zuzuführenden Polyisocyanat-Polyadditionsprodukte in Form von Schaumstoff-Platten vorliegen, die durch Umsetzung der Ausgangsmaterialien in geschlossenen Formen nach dem Reaktionsspritzgußverfahren hergestellt worden sind.

6. Verfahren gemäß Anspruch 1 bis 5, dadurch gekennzeichnet, daß die der thermoplastischen Formgebung zuzuführenden Polyisocyanat-Polyadditionsprodukte in Form von Laminataufbauten mit einer oder mehreren Lagen aus anderen organischen oder anorganischen Materialien vorliegen.

7. Verfahren gemäß Anspruch 1 bis 6, dadurch gekennzeichnet, daß die der thermoplastischen Formgebung zuzuführenden Polyisocyanat-Polyadditionsprodukte unter Mitverwendung von solchen, gegebenenfalls Ether- und/oder Estergruppen aufweisenden (Cyclo) Alkanpolyolen b) hergestellt worden sind, die ein Molekulargewicht von 92 bis 399 und eine Hydroxylfunktionalität von 3 und/oder 4 aufweisen, wobei die Menge dieser Komponente b) mindestens 10 Gew.-% bezogen auf das Gewicht der Komponenten a) bis e) beträgt.

8. Gemäß Anspruch 1 bis 7 erhaltene Formkörper.

9